# EUROPÄISCHE PATENTSCHRIFT

(11) **EP 2 884 104 B1**
(45) Veröffentlichungstag und Bekanntmachung des Hinweises auf die Patenterteilung: **23.05.2018**
(21) Anmeldenummer: 14196455.1
(22) Anmeldetag: 05.12.2014
(51) Int. Cl.: F04B 9/105, F04B 9/125, F04B 9/113, F04B 9/133

(54) **Kolbenpumpenvorrichtung**
Piston pump device
Dispositif de pompe à piston

(30) Priorität: 16.12.2013 DE 102013226131
(43) Veröffentlichungstag der Anmeldung: 17.06.2015
(73) Patentinhaber: SKF Lubrication Systems Germany GmbH, 69190 Walldorf (DE)
(72) Erfinder: Schmidt, Fabian, 14979 Großbeeren (DE); Kreutzkämper, Jürgen, 74915 Waibstadt-Daisbach (DE); Schmidt, Holger, 14532 Klein-Manchow (DE)
(74) Vertreter: Kuhstrebe, Jochen

(56) Entgegenhaltungen:
- AT-B- 191 206
- DE-A1- 2 738 178
- DE-A1- 4 205 796
- DE-A1- 4 230 106
- DE-A1-102006 026 274
- DE-A1-102010 051 290
- DE-U1-202004 015 718
- GB-A- 2 113 313

## Beschreibung

Vorliegende Erfindung betrifft eine Kolbenpumpenvorrichtung für eine Schmiermittelpumpe mit einem Doppelkolben, der einen Arbeitskolben und einen Förderkolben aufweist, die über eine Kolbenstange miteinander verbunden sind, wobei der Arbeitskolben dichtend in einem ersten Gehäuseteil und der Förderkolben dichtend in einem zweiten Gehäuseteil angeordnet sind, so dass Arbeitskolben und erstes Gehäuseteil einen Arbeitsraum für ein Arbeitsmedium und Förderkolben und zweites Gehäuseteil einen Förderraum für ein Fördermedium definieren. Eine solche Kolbenpumpenvorrichtung ist z.B. aus der DE 27 38 178 bekannt.

Bei den aus dem Stand der Technik bekannten Kolbenpumpenvorrichtungen mit einem Doppelkolben, der einen Förderkolben und einen Arbeitskolben umfasst, wird üblicherweise ein zu förderndes Medium mittels des Förderkolbens aus einem Vorratsbehälter über Unterdruckerzeugung angesaugt und dann mithilfe eines auf den Arbeitskolben ausgeübten Drucks komprimiert und in Richtung eines Fördermediumauslasses transportiert. Derartige Kolbenpumpenvorrichtungen werden insbesondere bei Schmiermittelpumpen eingesetzt. Dabei entstehen sowohl an dem Arbeitskolben, als auch an dem Förderkolben hohe Drücke, so dass sowohl die Form als auch das Material der Kolbenpumpenvorrichtung auf sehr hohe Drücke ausgelegt werden muss. Aus diesem Grund sind Kolbenpumpenvorrichtungen aus Stahl oder einem formstabilen Metall gefertigt.
Nachteilig an diesen bekannten Kolbenpumpenvorrichtungen ist jedoch, dass sie sehr schwer und groß sind, so dass sie beispielsweise bei einer mobilen Anwendung unter anderem im Kraftstoffverbrauch und Platzbedarf berücksichtigt werden müssen.

Aufgabe vorliegender Erfindung ist es deshalb eine Kolbenpumpenvorrichtung bereitzustellen, die gewicht- und platzsparend ausgebildet ist.
Diese Aufgabe wird durch eine Kolbenpumpenvorrichtung gemäß Patentanspruch 1, sowie eine Schmiermittelpumpe gemäß Patentanspruch 14 gelöst.

Erfindungsgemäß wird eine Kolbenpumpenvorrichtung für eine Schmiermittelpumpe bereitgestellt mit einem Doppelkolben, der einen Arbeitskolben und einen Förderkolben aufweist, die über eine Kolbenstange miteinander verbunden sind. Dabei sind der der Arbeitskolben dichtend in einem ersten Gehäuseteil und der Förderkolben dichtend in einem zweiten Gehäuseteil angeordnet, so dass der Arbeitskolben und erster Gehäuseteil einen Arbeitsraum für ein Arbeitsmedium und der Förderkolben und das zweite Gehäuseteil einen Förderraum für ein Fördermedium definieren. Dabei basiert die Erfindung auf der Idee, den Doppelkolben und/oder das zweite Gehäuseteil aus Kunststoff zu fertigen. Die erfindungsgemäße Fertigung von Doppelkolben und/oder zweitem Gehäuseteil aus Kunststoff verringert das Gewicht der Kolbenpumpenvorrichtung signifikant, so dass auch bei mobilen Anwendungen Kraftstoff gespart und insbesondere im Schwerlastbereich bzw. Nutzwagenbereich der Zuladungsrahmen vergrößert werden kann.

Dabei ist insbesondere vorteilhaft, den Doppelkolben und/oder das zweite Gehäuseteil aus einem unverstärkten Kunststoff, insbesondere aus Polyamid oder einem Polyamid enthaltenden Kunststoff, aus Polyoxymethylen oder einem Polyoxymethylen enthaltenden Kunststoff, oder aus Polypropylen oder einem Polypropylen enthaltenden Kunststoff, zu fertigen. Diese Kunststoffe haben dabei den Vorteil, zum einen vergleichsweise stabil zu sein und auch großen Drücken standhalten zu können, zum anderen bildet es eine im Wesentlichen glatte Oberfläche aus, so dass eine Dichtung zwischen dem Arbeitskolben und dem Förderkolben und den sie umgebenden ersten und zweiten Gehäuseteil erreicht werden kann.
Um der Kolbenpumpenvorrichtung trotz ihrer Kunststoffbestandteile eine besonders hohe Stabilität zu verleihen, ist außerdem bevorzugt ein Außengehäuse vorzusehen, das das erste und zweite Gebäudeteil umschließt, so dass erstes und zweites Gebäudeteil ein Innengehäuse ausbilden. Weiterhin ist vorteilhaft, wenn zwischen erstem Gehäuseteil und Außengehäuse ein Ringraum verbleibt, der vorzugsweise mit dem Arbeitsraum verbunden ist. Aufgrund dieses konstruktionellen Merkmals kann erreicht werden, dass innerhalb und außerhalb des ersten Gehäuseteils zumindest im Bereich des Arbeitsraums ein im Wesentlichen gleicher Druck herrscht, so dass das erste Gehäuseteil vereinfacht als Trennwand ausgebildet ist, die keinen hohen Drücken standhalten muss. Dadurch ist insbesondere eine Ausbildung des Innengehäuses aus Kunststoff, insbesondere aus den oben genannten, auch bei den bei einer Schmierpumpe zu erwartenden hohen Drücken möglich.

Weiterhin ist vorteilhaft, auch das Außengehäuse aus einem Kunststoff zu fertigen wobei vorzugsweise ein verstärkter Kunststoff, insbesondere eine fiberglasverstärkter Kunststoff, Verwendung findet. Verstärkte Kunststoffe zeichnen sich durch eine besonders hohe Formstabilität aus. Da jedoch insbesondere ein fiberglasverstärkter Kunststoff keine glatte Oberfläche ausbildet, ist die Verwendung des fverstärkten Kunststoffes für das Innengehäuse trotz der erhöhten Stabilität nicht vorteilhaft, da dann eine zwischen Arbeitskolben und erstem Gehäuseteil bzw. zwischen Förderkolben und zweitem Gehäuseteil angeordnete Dichtung zu schnell verschleißen würde bzw. eine Dichtung zwischen Kolbenabschnitt und Gehäuseteil nicht möglich ist. Da jedoch das Außengehäuse lediglich das Innengehäuse in sich aufnimmt und keine Dichtung an seiner Oberfläche verfährt, kann das Außengehäuse problemlos aus dem sehr stabilen fiberglasverstärkten Kunststoff ausgebildet sind.

Da nicht nur das erste Gehäuseteil, sondern im Förderraum über das vom Förderkolben komprimierte Fördermedium auch das zweite Gehäuseteil hohen Drücken ausgesetzt ist, ist es vorteilhaft, das zweite Gehäuseteil von einer Stabilisierungshülse zu umgeben. Dabei kann die Stabilisierungshülse vorzugsweise aus einem Metall oder dünnem Blech gefertigt sein. Statt eines Metalls kann auch hier ein Kunststoff insbesondere ein verstärkter Kunststoff zum Einsatz kommen.

Gemäß einem weiteren vorteilhaften Ausführungsbeispiel ist auf einer dem Arbeitsraum abgewandten Seite des Ringraums ein Arbeitsmediumeinlass angeordnet. Dadurch kann das Außengehäuse als einstückiges Element gefertigt werden, das den Arbeitsraum umgibt, so dass eine besonders große Stabilität erreicht wird.

Gemäß einem weiteren vorteilhaften Ausführungsbeispiel ist auf der dem Arbeitsraum abgewandten Seite des Arbeitskolbens ein vom Arbeitskolben, erstem Gehäuseteil, zweitem Gehäuseteil und Kolbenstange begrenzter Luftraum ausgebildet, der einen im Wesentlichen einem Umgebungsluftdruck entsprechenden Luftdruck aufweist. Dabei ist vorzugsweise eine Entlüftungseinrichtung zwischen Luftraum und Umgebung vorgesehen ist. Dieser Luftraum wird bei Verfahren des Doppelkolbens von einem oberen Totpunkt zu einem unteren Totpunkt verkleinert und bildet im Wesentlichen den Raum, in den der Arbeitskolben verfahren kann. Um keinen Gegendruck im Luftraum auf den Arbeitskolben auszuüben, ist die erfindungsgemäße Entlüftung vorgesehen, so dass auch beim Verfahren des Doppelkolbens zu seinem unteren Totpunkt kein Gegendruck aufgrund von komprimierter Luft entstehen kann.

Vorzugsweise ist in dem Luftraum eine Rückstellfeder vorgesehen, deren Federkraft einer Kraftwirkung des Arbeitsmediums auf den Arbeitskolben entgegengesetzt ist. Aufgrund der Rückstellfeder kann der Doppelkolben in seine ursprüngliche Position zurückgestellt werden, sobald er nicht mehr mit Arbeitsmedium druckbeaufschlagt ist. Dadurch wird auch der Förderkolben wieder in seine ursprüngliche Position verfahren, wobei ein im Förderraum entstehender Unterdruck dazu verwendet wird, Fördermedium aus dem Vorratsbehälter in den Förderraum zu transportieren. Aufgrund der Entlüftung des Federraums bzw. des Luftraums entsteht außerhalb des Förderraums jedoch kein Unterdruck, so dass die Feder nur gegen den Arbeitskolben und den im Förderraum herrschenden Unterdruck wirken muss.

Gemäß einem weiteren vorteilhaften Ausführungsbeispiel ist der Doppelkolben im Wesentlichen topfförmig ausgebildet, wobei vorzugsweise der Topfboden als Förderkolben, der Topfrand als Arbeitskolben und die Topfwand als Kolbenstange ausgebildet sind. Eine derartige Ausgestaltung erhöht zum einen die Stabilität des Kolbens, und zum anderen ermöglicht die im Wesentlichen hohl ausgebildete Kolbenstange eine Vergrößerung des Arbeitsraums für das Arbeitsmedium und damit eine gleichmäßige Druckverteilung des Arbeitsmediums auch auf den Förderkolbenbereich. Gerade bei der Ausgestaltung aus Kunststoff ist eine gleichmäßige Druckverteilung des Arbeitsmediums auf die einzelnen Kolbenelemente von Vorteil, um die Stabilität des Kolbens zu erhöhen.

Vorteilhafterweise kann die Stabilität des Kolbens zudem dadurch weiter erhöht werden, dass der Arbeitsraum ein taschenförmiges U-Profil aufweist, das derart ausgebildet ist, dass das zweite Gehäuseteil von dem Arbeitskolben zumindest teilweise umfassbar ist. Das taschenförmige U-Profil bewirkt dabei, dass die radiale und axiale Steifigkeit des Arbeitskolbens erhöht wird. Des Weiteren hat das taschenförmige U-Profil den Vorteil, dass eine sehr kompakte Kolbenpumpenvorrichtung bereitgestellt werden kann. Grund dafür ist, dass das zweite Gehäuseteil an dem unteren Totpunkt der Pumpe fast vollständig in der U-förmigen Tasche des Arbeitskolbens aufgenommen wird, wodurch die axiale Länge der Pumpe verringert werden kann.

Gemäß einem weiteren vorteilhaften Ausführungsbeispiel ist der Förderraum der Kolbenpumpenvorrichtung zumindest mit einem Fördermediumeinlass ausgestattet, der mit einem Fördermediumvorratsbehälter verbindbar ist und weist weiterhin einen Fördermediumauslass auf, der dazu ausgelegt ist, Fördermedium für einen Verbraucher bereitzustellen. Dabei kann vorteilhafterweise an Fördermediumeinlass und/oder Fördermediumeinlass eine Ventilanordnung vorgesehen sein, die derart ausgestaltet ist, dass bei Unterdruck im Förderraum, also bei einer Sogwirkung, Fördermedium aus dem Vorratsbehälter über den Fördermediumeinlass in den Förderraum eingebracht werden kann, bei Aufbringen eines Drucks auf das Fördermedium im Förderraum mittels des Kolbens jedoch der Fördermediumeinlass verschlossen ist. Dies kann beispielsweise über mindestens ein entsprechend angeordnetes Rückschlagventil erreicht werden, das dafür sorgt, dass Fördermedium nicht in den Vorratsbehälter zurückströmt bzw. Fördermedium von einem Verbraucher zurückgesaugt wird. Gleichzeitig kann vorgesehen sein, dass Fördermedium erst nach Erreichen eines bestimmten Förderdrucks, der über ein Zustellen des Förderkolbens aufgebaut wird, aus dem Förderraum austreten kann. Dabei kann weiterhin ein Druckschalter vorgesehen sein, der einen Druck des Fördermediums überwacht.

Dabei ist vorteilhafterweise die Ventilanordnung dazu ausgelegt, den Fördermediumeinlass mittels eines Rückschlagventils zu verschließen, und den Fördermediumauslass erst ab einem bestimmten Fördermediumdruck zu öffnen.

Vorzugsweise wird als Arbeitsmedium Druckluft oder ein Hydraulikfluid verwendet und/oder als Fördermittel ein Schmiermittel. Da Schmiermittel insbesondere bei Nutzfahrzeugen und Baumaschinen an verschiedene Verbraucher geführt werden muss, weisen derartige Maschinen oft eigene Schmiermittelpumpen auf. Gleichzeitig sind viele Elemente bei Nutzfahrzeugen bzw. Baumaschinen hydraulisch oder pneumatisch betrieben, so dass Druckluft bzw. Hydraulikfluid als Arbeitsmedium bereits bereitsteht.

Ein weiterer Aspekt vorliegender Erfindung betrifft eine Schmiermittelpumpe mit einem Gehäuse das einen Vorratsbehälter für Schmiermittel und einen eine Pumpeneinheit umfassenden Pumpengehäuseabschnitt aufweist, wobei die Pumpeneinheit dazu ausgelegt ist, ein Schmiermittel aus dem Vorratsbehälter an einen am Gehäuse angeordneten Schmiermittelauslass zu fördern, wobei erfindungsgemäß die Pumpeneinheit als oben beschriebene Pumpenvorrichtung ausgebildet ist.

Weitere Vorteile und vorteilhafte Ausführungsformen sind in den Ansprüchen, der Beschreibung und den Zeichnungen definiert.

Im Folgenden soll die Erfindung anhand von in den Zeichnungen dargestellten Ausführungsbeispielen näher beschrieben werden. Dabei sind die Ausführungsbeispiele rein exemplarischer Natur und sollen nicht den Schutzbereich der Anmeldung festlegen. Dieser wird allein durch die anhängigen Ansprüche definiert.

Es zeigen:
- Fig. 1:: eine schematische Explosionsdarstellung einer erfindungsgemäßen Schmiermittelpumpe;
- Fig. 2:: eine schematische Schnittansicht durch die in Fig. 1 dargestellte Kolbenpumpenvorrichtung entlang der Schnittlinie A-A;
- Fig. 3:: eine Schnittansicht durch die in Fig. 1 dargestellte Kolbenpumpenvorrichtung entlang einer Schnittlinie B-B;
- Fig. 4:: eine Schnittansicht durch die in Fig. 1 dargestellten Kolbenpumpenvorrichtung mit Gehäuse entlang einer Schnittlinie C-C; und
- Fig. 5:: eine schematisch Aufsicht auf einen Pumpengehäusebodenabschnitt.

Im Folgenden werden gleiche oder funktionell gleichwirkende Elemente mit den gleichen Bezugszeichen gekennzeichnet.

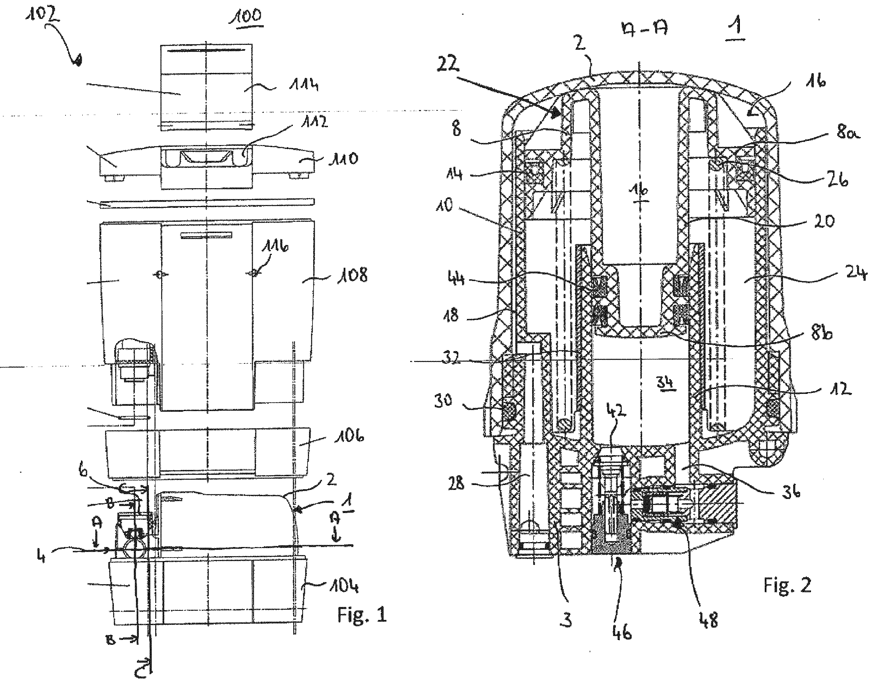

Fig. 1 zeigt eine schematische Explosionsdarstellung einer erfindungsgemäßen Schmiermittelpumpe 100 mit einem Gehäuse 102, das aus mehreren Teilen, unter anderem einem Pumpengehäusebodenabschnitt 104, einem Pumpengehäusedeckelabschnitt 106, einem Vorratsbehälter 108 und einem Vorratsbehälterdeckel 110 aufgebaut ist. Wie weiterhin Fig. 1 zu entnehmen, ist in dem Pumpengehäusebodenabschnitt 104 eine Kolbenpumpenvorrichtung 1 angeordnet auf die im Folgenden genauer eingegangen wird. Der Vorratsbehälter 108 dient zur Aufnahme eines Fördermediums, insbesondere von Schmiermittel, und wird über eine an der Oberseite des Vorratsbehälterdeckels 110 ausgebildete Einfüllöffnung 112 mit Fördermedium/Schmiermittel befüllt. Dabei ist die Einfüllöffnung 112 mittels eines Deckelelements 114 abgedeckt, wobei das Deckelelement 114 an Scharnieren 116 an einer Vorderseite des Vorrastbehälters 108 angeordnet ist.

Weiterhin zeigt Fig. 1, dass die Kolbenpumpenvorrichtung 1 selbst in einem Außengehäuse 2 aufgenommen ist, und neben der Kolbenpumpenvorrichtung 1 eine Ventilanordnung 4 angeordnet ist. Um das Fördermedium, insbesondere das Schmiermittel, aus dem Vorratsbehälter 108 in die Kolbenpumpenvorrichtung 1 zu bringen, ist weiterhin ein Fördermediumeinlassstutzen 6 vorgesehen, der mit dem Vorratsbehälter 108 verbindbar ist und über den, wie weiter unten genauer beschrieben wird, Fördermedium in einen Förderraum der Kolbenpumpenvorrichtung 1 gesaugt wird.

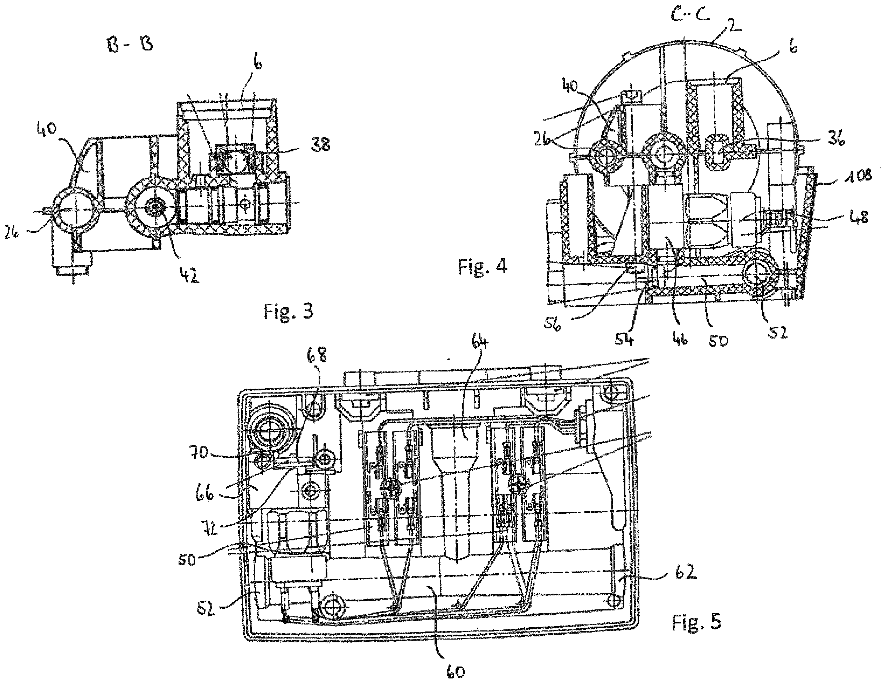

Im Folgenden wird insbesondere auf die Kolbenpumpenvorrichtung 1 eingegangen, wobei die Figuren 2 und 3, nur die Kolbenpumpenvorrichtung, die Figuren 4 und 5, die Kolbenpumpenvorrichtung 1 im Pumpengehäusebodenabschnitt 104 zeigen.

Dabei stellt Fig. 2 die Schnittansicht entlang der Linie A-A dar, während Fig. 3 eine Schnittansicht entlang der Linie B-B ohne Pumpengehäusebodenabschnitt 104 zeigt.

Wie der Schnittansicht aus Fig. 2 entnommen werden kann, weist die Kolbenpumpenvorrichtung 1 ein in dem Außengehäuse 2 aufgenommenes Innengehäuse 3 auf, das mittels Dichtungen 30 gegen das Außengehäuse 2 abgedichtet ist. In dem Innengehäuse 30 ist wiederum ein Kolben 8 angeordnet, der als Doppelkolben mit einem Arbeitskolben 8a und einem Förderkolben 8b ausgebildet ist. Dabei liegt der Arbeitskolben 8a dichtend an einem ersten Gehäuseteil 10 des Innengehäuses 3 an, während der Förderkolben 8b in einem zweiten Gehäuseteil 12 des Innengehäuses 3 aufgenommen ist. Dazu weist der Arbeitskolben 8a an seinem radial äußeren Rand Dichtungselemente 14 auf, die den Arbeitskolben 8a an dem ersten Gehäuseteil 10 dichtend anliegen lassen, so dass zwischen dem Arbeitskolben 8a, dem ersten Gehäuseteil 10 und dem Außengehäuse 2 ein Arbeitsraum 16 für ein Arbeitsmedium bereitgestellt ist. Dabei zeigt Fig. 2, dass der Arbeitsraum 16 sich nicht nur rechts und links von dem Kolben 8 erstreckt, sondern aufgrund der erfindungsgemäßen im Wesentlichen topfförmigen Ausformung des Doppelkolbens 8 mit einer hohlen Kolbenstange 20 sich auch in den Hohlraum der Kolbenstange 20 erstreckt. Dadurch kann der Druck des Arbeitsmediums auch direkt auf den Förderkolben 8b übertragen werden, so dass die Druckverteilung am Doppelkolben verbessert ist.

Weiterhin kann man Fig. 2 entnehmen, dass zwischen dem Außengehäuse 2 und dem ersten Gehäuseabschnitt 10 ein Ringraum 18 verbleibt, der ebenfalls mit dem Arbeitsraum 16 zusammenwirkt. Über diesen erfindungsgemäßen Ringraum 18 wird das Gehäuseteil 10 zumindest im Bereich des Arbeitsraums 16 von allen Seiten mit Druck beaufschlagt, so dass die Stabilität des ersten Gehäuseteils 10 verstärkt wird.

Zudem weist der Doppelkolben 8 erfindungsgemäß im Bereich des Arbeitskolbens, eine Umstülpung 22 auf, die für eine erhöhte Stabilität des Doppelkolbens 8 sorgt und eine Angriffsfläche für das Arbeitsmedium am Arbeitskolben vergrößert, wodurch die Druckbelastung auf den Arbeitskolben verringert werden kann. Weiterhin ist der Doppelkolben 8, wie oben bereits erwähnt, im Wesentlichen topfförmig ausgebildet, mit einer als Topfwand ausgebildeten Kolbenstange 20, einem als Topfboden ausgebildeten Förderkolben 8b und einem als Topfrand ausgebildeten Arbeitskolben 8a. Dabei ist der Topfrand des Förderkolbens 8a vorzugsweise mit der oben beschriebenen Umstülpung 22 ausgebildet. Da weiterhin auch im Topfinneren, also in der hohlen Kolbenstange 20, wie bereits oben beschrieben, der Arbeitsdruck des Arbeitsmediums herrscht, kann der Druck des Arbeitsmediums direkt auf den Förderkolben 8b wirken. Des Weiteren ermöglicht die erfindungsgemäße Umstülpung 22, dass die Kolbenpumpenvorrichtung 1 eine besonders kompakte Ausbildung aufweist, da in der Umstülpung 22 das zweite Gehäuseteil 12 zumindest teilweise aufnehmbar ist.

Aufgrund der erfindungsgemäßen Ausgestaltung des Doppelkolbens 8 mit Umstülpung 22 bzw. der Topfform mit der daraus resultierenden hohlen Kolbenstange 20 kann auf einen massiven und schweren Stahldoppelkolben verzichtet werden. Selbst wenn Stahl weiterhin als Material für den Doppelkolben 8 verwendet wird, so ist durch die hohle Ausgestaltung der Kolbenstange 20 dennoch eine signifikante Gewichteinsparung möglich. Gleichzeitig eröffnet sich auch die Möglichkeit, andere Materialien, wie beispielsweise ein leichtes aber weiches Metall oder sogar Kunststoff, zu verwenden.

Diese erfindungsgemäßen Ausgestaltungen ermöglichen es, den Doppelkolben 8 und/oder das zweite Gehäuseteil 10; 12 aus einem weniger druckstabilen Material als Stahl zu fertigen, nämlich aus einem Kunststoff. Dabei ist insbesondere bevorzugt, das Außengehäuse 2 aus einem verstärkten, insbesondere glasfaserverstärkten Kunststoff auszubilden, während das erste und zweite Gehäuseteil 10; 12 aus einem unverstärkten Kunststoff, wie beispielsweise aus Polyamid, Polyoxymethylen, Polypropylen oder ähnlichen Kunststoffen hergestellt werden können. Diese Kunststoffe haben den Vorteil, dass die daraus gefertigten Wände sehr glatt und damit optimal für die Dichtung 14 des Arbeitskolbens und eine Dichtung 44 am Förderkolben 8b ausgestaltet werden können, während das glasfaserverstärkte Außengehäuse 2 zwar keine glatten Wände aufweist, aber dafür besonders großen Drücken statthalten kann. Die mangelnde Stabilität des unverstärkten Kunststoffs des ersten Gehäuseteils 10 kann dabei über den erfindungsgemäßen Ringraum 18 kompensiert werden. Das zweite Gehäuseteil 12 kann dagegen mit einer Stabilisierungshülse 32 umgeben sein. Diese Stabilisierungshülse 32 kann beispielsweise aus einem dünnen Metall oder einem Blech gefertigt sein, es ist jedoch auch möglich, wie für das Außengehäuse 2, einen Kunststoff, insbesondere einen glasfaserverstärkten Kunststoff, zu verwenden. Dabei sind üblicherweise erstes und zweites Gehäuseteil aus demselben Material gefertigt, da das Innengehäuse als zusammenhängendes Bauteil ausgebildet ist. Dennoch ist vorstellbar, erstes und zweites Gehäuseteil als separate Bauteile auszubilden.
Weiterhin zeigt Fig. 2, dass auf der dem Arbeitsraum 16 abgewandten Seite des Arbeitskolbens 8a ein Luftraum bzw. Federraum 24 verbleibt, in dem eine Rückstellfeder 26 angeordnet ist. Dabei ist der Federraum 24 gegenüber der Umgebung entlüftet, so dass im Federraum 24 und in der Umgebung im Wesentlichen der gleiche Druck herrscht. Dadurch kann beim Zustellen des Kolbens 8 im Federraum 24 kein Gegendruck aufgebaut werden, der dem Druck des Arbeitsmediums im Arbeitsraum 16 entgegenwirkt. Auf die Anordnung der Entlüftung wird weiter unten mit Bezug auf Fig. 3 eingegangen. Die Rückstellfeder 26 ermöglicht, dass der Kolben 8 von seinem unteren Totpunkt wieder zu seinem oberen Totpunkt rückgestellt werden kann.

Um Arbeitsmedium in den Ringraum 18 und weiter in den Arbeitsraum 16 einzuleiten, weist die Kolbenpumpenvorrichtung 1 weiterhin einen Arbeitsmediumzugang 28 auf. Dabei ist der Arbeitsmediumzugang 28 in dem Innengehäuse 3 ausgebildet und mündet in den zwischen dem Außengehäuse 2 und dem ersten Gehäuseteil 10 ausgebildeten Ringraum 18.

Wie Fig. 2 weiter zeigt, befindet sich der Förderkolben 8b an seinem oberen Totpunkt und bildet zwischen Förderkolben 8b und zweitem Gehäuseteil 12 einen Förderraum 34 aus, in den ein Fördermedium, insbesondere ein Schmiermittel, aus dem Vorratsbehälter 108 einbringbar ist. Dazu wird das Fördermedium über den Fördermediumeinlassstutzen 6 und die Ventilanordnung 4 zu einem Fördermediumeinlass 36 und von dort in den Förderraum 34 eingebracht. Die Ventilanordnung 4 weist dazu vorzugsweise ein Rückschlagventil 38 auf, das insbesondere in der Schnittansicht der Fig. 3 dargestellt ist.

Weiterhin zeigt die Schnittansicht von Fig. 3 eine mögliche Anordnung für die Entlüftung 40 des Federraums 24, die im dargestellten Beispiel in unmittelbarer Nähe des Arbeitsmediumzugangs 28 ausgebildet ist. Zudem ist in Fig. 3 ein Fördermediumauslass 42 dargestellt, auf den weiter unten noch genauer eingegangen wird.

Rückkehrend zu Fig. 2, zeigt die Figur weiterhin, dass der Förderkolben 8b über Dichtungen 44 dicht an dem zweiten Gehäuseteil 12 anliegt. Dadurch entsteht beim Verfahren des Kolbens 8 von einem unteren Totpunkt zu dem in Fig. 2 dargestellten oberen Totpunkt ein Unterdruck in dem Förderraum 34, der wiederum mit dem in dem Fördermediumeinlassstutzen 6 angeordneten Rückschlagventil 38 zusammenwirkt, so dass sich das Rückschlagventil 38 öffnet und den Fördermediumeinlass 36 mit dem Fördermediumeinlassstutzen 6 und damit mit dem Vorratsbehälter 108 fluidisch verbindet, so dass ein Eintritt des Fördermediums aus dem Vorratsbehälter 108 in den Förderraum 34 möglich ist.

Wird der Kolben 8 dagegen von seinem oberen Totpunkt in Richtung seines unteren Totpunkts bewegt, so schließt sich das Rückschlagventil 38, so dass kein Fördermedium in den Vorratsbehälter 108 zurückfließen kann. Für einen Auslass des Fördermediums aus dem Förderraum 34 ist an dem Fördermediumauslass 42 eine weitere Ventilanordnung 46 vorgesehen, die sich vorzugsweise abhängig von einem im Förderraum 34 herrschenden Druck des Fördermediums öffnet, den Fördermediumauslass 42 freigibt und ermöglicht, dass Fördermedium aus dem Förderraum 34 austreten kann. Weiterhin kann an der Ventilanordnung 46 ein Druckschalter 48 angeordnet sein, der einen im Förderraum 34 herrschenden Druck überwacht.

Der Einlass und der Auslass des Schmiermittels in die Kolbenpumpenvorrichtung 1 bzw. aus der Kolbenpumpenvorrichtung 1 wird insbesondere unter Bezugnahme auf die Fig. 4 und 5 deutlich. Fig. 4 zeigt dabei eine Schnittansicht der Kolbenpumpenvorrichtung 1 aus Fig. 1 entlang der Linie C-C, während Fig. 5 eine Aufsicht auf den Pumpengehäusebodenabschnitt 104 ohne Kolbenpumpenvorrichtung 1 zeigt.

Wie Fig. 4 zu entnehmen, ist der Fördermediumeinlassstutzen 6 fluidisch mit dem Fördermediumeinlass 36 verbunden. Nicht dargestellt ist in dieser Ansicht das Rückschlagventil 38, das nur bei einem im Förderraum 34 herrschenden Unterdruck sich öffnet. Neben dem Fördermediumeinlass 36 ist der Fördermediumauslass 42 dargestellt, der den Förderraum 34 mit der Ventilanordnung 46 verbindet. Dabei wird die Ventilanordnung 46 derart geregelt, so dass erst ab einem bestimmten im Förderraum 34 herrschenden Druck Fördermedium aus dem Fördermediumauslass 42 treten kann. Dabei wird der Druck mit Hilfe des Druckschalters 48 überwacht. Ist der vorbestimmte Druck erreicht, öffnet sich die Ventilanordnung 46, so dass Schmiermittel in einen Fördermediumkanal 50 eintreten kann, der Teil des Pumpengehäusebodenabschnitts 104 ist. Der Fördermediumkanal 50 wiederum mündet in einen gehäuseseitigen Fördermediumauslass 52, der beispielsweise mit Zulaufleitungen zu einem Verbraucher verbindbar ist.

Weiterhin zeigt Fig. 4, dass konstruktionsbedingt der Fördermediumkanal 50 eine zweite mit einem Stopfen 54 verschlossene Öffnung aufweist. Dieser Stopfen 54 wird über ein Befestigungsmittel 56 in seiner Lage gesichert. Gleichzeitig dient das Befestigungsmittel 56 dazu, die Kolbenpumpenvorrichtung 1 in dem Pumpengehäusebodenabschnitt 104 zu befestigen.

Ein weiterer Aspekt der erfindungsgemäßen Kolbenpumpenvorrichtung 1 ist in Fig. 5 dargestellt. Dabei zeigt Fig. 5 eine Aufsicht auf den Pumpengehäusebodenabschnitt 104 ohne die Kolbenpumpenvorrichtung 1. Dabei ist wiederum der Druckschalter 48 zu sehen. Weiterhin kann der Fig. 5 entnommen werden, dass der Fördermediumkanal 50 sich nicht nur zu einem einzigen gehäuseseitigen Fördermediumauslass 52 hin verzweigt, sondern das Fördermedium über ein Kanalsystem 60 an zwei weitere Auslässe 62, 64 seitlich bzw. rückseitig des Pumpengehäusebodenabschnitts 104 verteilt werden kann. Weiterhin kann der Aufsicht aus Fig. 5 entnommen werden, dass das Befestigungsmittel 56 nicht nur dazu geeignet ist, die Kolbenpumpenvorrichtung 1 in dem Pumpengehäusebodenabschnitt 104 zu sichern, sondern gleichzeitig ein Halteelement 66 befestigt, das wiederum dazu ausgelegt ist, einen Füllstandsensor 68 in einer senkrechten Position zu sichern. Dazu weist das Halteelement 66 eine erste vertikale Kante 70 und eine zur ersten vertikalen Kante 70 im Wesentlichen senkrecht angeordnete zweite vertikale Kante 72 auf, die als Abstützelemente für den Füllstandsensor 68 dienen.

Insgesamt ermöglicht die in den Figuren dargestellte Ausgestaltung des Innengehäuses mit erstem und zweitem Gehäuseteil, die spezielle Kolbenform, und die Aufnahme des Innengehäuses in einem Außengehäuse, wobei zwischen Außengehäuse und erstem Gehäuseteil ein Ringraum verbleibt, dass das zweite Gehäuseteil und/der der Doppelkolben aus Kunststoff fertigbar sind. Dadurch kann erreicht werden, dass die Kolbenpumpenvorrichtung insgesamt leichter ausgebildet ist und kostengünstiger hergestellt werden kann. Auch die Verwendung von einem verstärkten insbesondere glasfaserverstärkten Kunststoff für das Außengehäuse, während das Innengehäuse aus einem unverstärkten Kunststoff bestehen, ist vorteilhaft. Um den hohen Druckanforderungen zu genügen, ist weiterhin der Kolben erfindungsgemäß topfförmig ausgebildet und weist an seinem Topfrand eine Umstülpung auf, die zum einen dem Kolben eine erhöhte Stabilität verleiht und zum anderen den zweiten Gehäuseteil zumindest teilweise aufnehmen kann, so dass eine besonders kompakte Ausgestaltung der Kolbenpumpenvorrichtung möglich ist. Dabei stabilisiert der erfindungsgemäße Ringraum, der zwischen Außengehäuse und erstem Gehäuseteil ausgebildet ist, den Kunststoff des ersten Gehäuseteils, so dass auch ein Einsatz als Hochdruckpumpe möglich ist. Um das zweite Gehäuseteil und damit die Führung für den Förderkolben zu stabilisieren, kann zudem das zweite Gehäuseteil in einer Hülse aufgenommen sein. Zudem ermöglicht der sich bis in das Innere der Kolbenstange erstreckende Arbeitsraum eine große Wirkung und eine weitere Stabilisierung des Kolbens. All diese konstruktiven Merkmale ermöglichen es zudem, die Kolbenpumpe nicht mehr, wie bisher bekannt, aus Metall, sondern aus Kunststoff zu fertigen.

### Bezugszeichenliste

- 1: Kolbenpumpenvorrichtung
- 2: Außengehäuse
- 3: Innengehäuse
- 4: Ventilanordnung
- 6: Fördermediumeinlassstutzen
- 8: Doppelkolben
- 8a: Arbeitskolben
- 8b: Förderkolben
- 10: erster Gehäuseabschnitt
- 12: zweiter Gehäuseabschnitt
- 14: Dichtung
- 16: Arbeitsraum
- 18: Ringraum
- 20: Kolbenstange
- 22: Umstülpung des Kolbens
- 24: Luftraum/Federraum
- 26: Rückstellfeder
- 28: Arbeitsmediumzugang
- 30: Dichtung
- 32: Stabilisierungshülse
- 34: Förderraum
- 36: Fördermediumeinlass
- 38: Rückstellventil
- 40: Entlüftung
- 42: Fördermediumauslass
- 44: Dichtungen
- 46: Ventilanordnung
- 48: Druckschalter
- 50: Fördermediumkanal
- 52: gehäuseseitiger Fördermediumauslass
- 54: Stopfen
- 56: Befestigungsmittel
- 60: Schmiermittelverteilkanal
- 62, 64: gehäuseseitige Schmiermittelauslässe
- 66: Halteelement
- 68: Füllstandssensor
- 70, 72: Anschlagsfläche

- 100: Schmiermittelpumpe
- 102: Gehäuse
- 104: Pumpengehäusebodenabschnitt
- 106: Pumpengehäuseabdeckabschnitt
- 108: Vorratsbehälter
- 110: Vorratsbehälterabdeckung
- 112: Schmiermitteleinlassöffnung
- 114: Deckel
- 116: Scharnier

## Patentansprüche

1. Kolbenpumpenvorrichtung (1) für eine Schmiermittelpumpe, mit einem Doppelkolben (8), der einen Arbeitskolben (8a) und einen Förderkolben (8b) aufweist, die über eine Kolbenstange (20) miteinander verbunden sind, wobei der Arbeitskolben (8a) dichtend in einem ersten Gehäuseteil (10) und der Förderkolben (8b) dichtend in einem zweiten Gehäuseteil (12) angeordnet sind, so dass Arbeitskolben (8a) und erster Gehäuseteil (10) einen Arbeitsraum (16) für ein Arbeitsmedium und Förderkolben (8b) und zweites Gehäuseteil (12) einen Förderraum (34) für ein Fördermedium definieren, **dadurch gekennzeichnet, dass** der Doppelkolben (8) und/oder das zweite Gehäuseteil (12) aus Kunststoff gefertigt sind.

2. Kolbenpumpenvorrichtung (1) nach Anspruch 1, wobei das erste Gehäuseteil (10) aus Kunststoff gefertigt sind

3. Kolbenpumpenvorrichtung nach Anspruch 1 oder 2, wobei der Doppelkolben (8) und/oder das ersten und/oder das zweite Gehäuseteil (10; 12) aus einem unverstärkten Kunststoff, insbesondere aus Polyamid oder einem Polyamid enthaltenden Kunststoff, aus Polyoxymethylen oder einem Polyoxymethylen enthaltenden Kunststoff, oder aus Polypropylen oder einem Polypropylen enthaltenden Kunststoff, gefertigt ist.

4. Kolbenpumpenvorrichtung (1) nach Anspruch 1, 2oder 3, wobei weiterhin ein Außengehäuse (2) vorgesehen ist, das erstes und zweites Gehäuseteil (10; 12) umschließt, so dass erstens und zweites Gehäuseteil (10; 12) ein Innengehäuse (3) ausbilden.

5. Kolbenpumpenvorrichtung (1) nach Anspruch 4, wobei zwischen erstem Gehäuseteil (10) und Außengehäuse (2) ein Ringraum (18) vorgesehen ist, der vorzugsweise mit dem Arbeitsraum (16) verbunden ist.

6. Kolbenpumpenvorrichtung (1) nach Anspruch 5, wobei das Außengehäuse (2) aus Kunststoff, insbesondere einem verstärkten Kunststoff, vorzugsweise einem glasfaserverstärkten Kunststoff, gefertigt ist.

7. Kolbenpumpenvorrichtung (1) nach einem der vorhergehenden Ansprüche, wobei auf einer dem Arbeitsraum (16) abgewandten Seite ein Arbeitsmediumzugang (28) angeordnet ist, der vorzugsweise mit dem Ringraum (18) verbunden ist.

8. Kolbenpumpenvorrichtung (1) nach einem der vorhergehenden Ansprüche, wobei auf der dem Arbeitsraum (16) abgewandten Seite des Arbeitskolben (8a) ein von Arbeitskolben (8a), erstem Gehäuseteil (10), zweitem Gehäuseteil (12) und Kolbenstange (20) begrenzter Luftraum (24) ausgebildet ist, der einen im Wesentlichen einem Umgebungsluftdruck entsprechenden Luftdruck aufweist, wobei vorzugsweise eine Entlüftungseinrichtung (40) zwischen Luftraum (24) und Umgebung vorgesehen ist.

9. Kolbenpumpenvorrichtung (1) nach Anspruch 8, wobei in dem Luftraum (24) eine Rückstellfeder (26) vorgesehen ist, deren Federkraft einer Kraftwirkung des Arbeitsmediums auf den Arbeitskolben (8a) entgegengesetzt ist.

10. Kolbenpumpenvorrichtung (1) nach einem der vorhergehenden Ansprüche, wobei der Doppelkolben (8) topfförmig ausgebildet ist, wobei vorzugsweise der Topfboden als Förderkolben (8b), der Topfrand als Arbeitskolben (8a) und die Topfwand als Kolbenstange (20) ausgebildet ist.

11. Kolbenpumpenvorrichtung (1) nach einem der vorhergehenden Ansprüche, wobei das zweite Gehäuseteil (12), vorzugsweise außen, von einem Stabilisierungselement (32), insbesondere einer Hülse umgeben ist, wobei vorzugsweise das Stabilisierungselement aus Metall oder einem Kunststoff, insbesondere einem verstärkten Kunststoff, gefertigt ist.

12. Kolbenpumpenvorrichtung (1) nach einem der vorhergehenden Ansprüche, wobei der Arbeitskolben (8a) ein taschenförmiges U-Profil (22) aufweist, das derart ausgebildet ist, dass das zweite Gehäuseteil (12) von dem Arbeitskolben (8a) zumindest teilweise umschlossen wird.

13. Kolbenpumpenvorrichtung (1) nach einem der vorhergehenden Ansprüche, wobei der Förderraum (34) zumindest einen Fördermediumeinlass (36), der mit einem Fördermediumvorratsbehälter (108) und einen Fördermediumauslass (42), der mit einem Fördermediumverbraucher verbindbar ist, aufweist.

14. Kolbenpumpenvorrichtung (1) nach Anspruch 13, wobei weiterhin eine Ventilanordnung (4; 38; 46) vorgesehen ist, mit der ein Öffnen und/oder Schließen des Fördermediumeinlasses (36) und/oder des Fördermediumauslasses (42) regelbar ist.

15. Schmiermittelpumpe (100) mit einem Gehäuse (102) das einen Vorratsbehälter (108) für Schmiermittel und einen eine Pumpeneinheit (1) umfassenden Pumpengehäuseabschnitt (104, 106) aufweist, wobei die Pumpeneinheit (1) dazu ausgelegt ist ein Schmiermittel aus dem Vorratsbehälter (108) an einen am Gehäuse (102) angeordneten Schmiermittelauslass (52, 62, 64) zu fördern, **dadurch gekennzeichnet, dass** die Pumpeneinheit als Kolbenpumpenvorrichtung (1) nach einem der vorhergehenden Ansprüche ausgebildet ist.

## Claims

1. Piston pump device (1) for a lubricant pump, with a double piston (8), which comprises a working piston (8a) and a delivery piston (8b), which are connected to one another by way of a piston rod (20), wherein the working piston (8a) is arranged in a sealing manner in a first housing part (10) and the delivery piston (8b) is arranged in a sealing manner in a second housing part (12), so that the working piston (8a) and the first housing part (10) define a working space (16) for a working medium and the delivery piston (8b) and the second housing part (12) define a delivery space (34) for a delivery medium, **characterized in that** the double piston (8) and/or the second housing part (12) are made of plastic.

2. Piston pump device (1) according to Claim 1, wherein the first housing part (10) are made of plastic.

3. Piston pump device according to Claim 1 or 2, wherein the double piston (8) and/or the first and/or the second housing part (10; 12) is made of an unreinforced plastic, in particular of polyamide or a plastic containing polyamide, of polyoxymethylene or a plastic containing polyoxymethylene, or of polypropylene or a plastic containing polypropylene.

4. Piston pump device (1) according to Claim 1, 2 or 3, wherein an outer housing (2) is also provided, enclosing the first and second housing parts (10; 12), so that the first and second housing parts (10; 12) form an inner housing (3).

5. Piston pump device (1) according to Claim 4, wherein an annular space (18), which is preferably connected to the working space (16), is provided between the first housing part (10) and the outer housing (2).

6. Piston pump device (1) according to Claim 5, wherein the outer housing (2) is made of plastic, in particular a reinforced plastic, preferably a glass-fibre reinforced plastic.

7. Piston pump device (1) according to one of the preceding claims, wherein a working medium access (28), which is preferably connected to the annular space (18), is arranged on a side facing away from the working space (16).

8. Piston pump device (1) according to one of the preceding claims, wherein an air space (24), which is bounded by the working piston (8a), the first housing part (10), the second housing part (12) and the piston rod (20), is formed on the side of the working piston (8a) that is facing away from the working space (16) and has an air pressure corresponding substantially to an ambient air pressure, wherein a venting device (40) is preferably provided between the air space (24) and the surroundings.

9. Piston pump device (1) according to Claim 8, wherein a restoring spring (26), the spring force of which is opposed by a force effect of the working medium on the working piston (8a), is provided in the air space (24).

10. Piston pump device (1) according to one of the preceding claims, wherein the double piston (8) is formed in the manner of a pot, wherein preferably the bottom of the pot is formed as the delivery piston (8b), the periphery of the pot is formed as the working piston (8a) and the wall of the pot is formed as the piston rod (20).

11. Piston pump device (1) according to one of the preceding claims, wherein the second housing part (12), is surrounded, preferably on the outside, by a stabilizing element (32), in particular a sleeve, wherein the stabilizing element is preferably made of metal or plastic, in particular a reinforced plastic.

12. Piston pump device (1) according to one of the preceding claims, wherein the working piston (8a) has a pocket-shaped U profile (22), which is formed in such a way that the second housing part (12) is at least partially enclosed by the working piston (8a).

13. Piston pump device (1) according to one of the preceding claims, wherein the delivery space (34) has at least one delivery medium inlet (36), which can be connected to a delivery medium reservoir (108), and a delivery medium outlet (42), which can be connected to a delivery medium consumer.

14. Piston pump device (1) according to Claim 13, wherein a valve arrangement (4; 38; 46) is also provided, with which an opening and/or closing of the delivery medium inlet (36) and/or of the delivery medium outlet (42) can be controlled.

15. Lubricant pump (100) with a housing (102), which has a reservoir (108) for lubricant and a pump housing portion (104, 106) comprising a pump unit (1), wherein the pump unit (1) is designed to deliver a lubricant from the reservoir (108) to a lubricant outlet (52, 62, 64) arranged on the housing (102), **characterized in that** the pump unit is formed as a piston pump device (1) according to one of the preceding claims.

## Revendications

1. Dispositif de pompe à piston (1) pour une pompe de lubrifiant, comprenant un double piston (8) qui présente un piston de travail (8a) et un piston de refoulement (8b), qui sont connectés l'un à l'autre par le biais d'une tige de piston (20), le piston de travail (8a) étant disposé de manière hermétique dans une première partie de boîtier (10) et le piston de refoulement (8b) étant disposé de manière hermétique dans une deuxième partie de boîtier (12), de telle sorte que le piston de travail (8a) et la première partie de boîtier (10) définissent un espace de travail (16) pour un fluide de travail et que le piston de refoulement (8b) et la deuxième partie de boîtier (12) définissent un espace de refoulement (34) pour un fluide de refoulement, **caractérisé en ce que** le double piston (8) et/ou la deuxième partie de boîtier (12) sont fabriqués en plastique.

2. Dispositif de pompe à piston (1) selon la revendication 1, dans lequel la première partie de boîtier (10) sont fabriquées en plastique.

3. Dispositif de pompe à piston selon la revendication 1 ou 2, dans lequel le double piston (8) et/ou la première et/ou la deuxième partie de boîtier (10 ; 12) sont fabriqués à partir d'un plastique non renforcé, en particulier à partir de polyamide ou d'un plastique contenant du polyamide, de polyoxyméthylène ou d'un plastique contenant du polyoxyméthylène, ou de polypropylène ou d'un plastique contenant du polypropylène.

4. Dispositif de pompe à piston (1) selon la revendication 1, 2 ou 3, dans lequel en outre un boîtier extérieur (2) est prévu, lequel entoure la première et la deuxième partie de boîtier (10 ; 12) de telle sorte que la première et la deuxième partie de boîtier (10 ; 12) constituent un boîtier intérieur (3).

5. Dispositif de pompe à piston (1) selon la revendication 4, dans lequel un espace annulaire (18) est prévu entre la première partie de boîtier (10) et le boîtier extérieur (2), lequel est de préférence connecté à l'espace de travail (16).

6. Dispositif de pompe à piston (1) selon la revendication 5, dans lequel le boîtier extérieur (2) est fabriqué en plastique, en particulier en plastique renforcé, de préférence en plastique renforcé par des fibres de verre.

7. Dispositif de pompe à piston (1) selon l'une quelconque des revendications précédentes, dans lequel un accès à un fluide de travail (28) est disposé au niveau d'un côté opposé à l'espace de travail (16), lequel accès est de préférence connecté à l'espace annulaire (18).

8. Dispositif de pompe à piston (1) selon l'une quelconque des revendications précédentes, dans lequel du côté opposé à l'espace de travail (16) du piston de travail (8a) est réalisé un espace d'air (24) délimité par le piston de travail (8a), la première partie de boîtier (10), la deuxième partie de boîtier (12) et la tige de piston (20), lequel présente une pression d'air correspondant essentiellement à une pression d'air atmosphérique, un dispositif de désaérage (40) étant de préférence prévu entre l'espace d'air (24) et l'environnement.

9. Dispositif de pompe à piston (1) selon la revendication 8, dans lequel, dans l'espace d'air (24) est prévu un ressort de rappel (26) dont la force de ressort est opposée à l'action d'une force du fluide de travail sur le piston de travail (8a).

10. Dispositif de pompe à piston (1) selon l'une quelconque des revendications précédentes, dans lequel le double piston (8) est réalisé en forme de pot, le fond de pot étant réalisé de préférence en tant que piston de refoulement (8b), le bord du pot étant réalisé sous forme de piston de travail (8a) et la paroi du pot étant réalisée sous forme de tige de piston (20).

11. Dispositif de pompe à piston (1) selon l'une quelconque des revendications précédentes, dans lequel la deuxième partie de boîtier (12) est entourée de préférence à l'extérieur par un élément de stabilisation (32), en particulier une douille, l'élément de stabilisation étant de préférence fabriqué en métal ou en plastique, en particulier en plastique renforcé.

12. Dispositif de pompe à piston (1) selon l'une quelconque des revendications précédentes, dans lequel le piston de travail (8a) présente un profilé en U en forme de poche (22) qui est réalisé de telle sorte que la deuxième partie de boîtier (12) soit au moins en partie entourée par le piston de travail (8a).

13. Dispositif de pompe à piston (1) selon l'une quelconque des revendications précédentes, dans lequel l'espace de refoulement (34) présente au moins une entrée de fluide de refoulement (36) qui peut être connectée à un réservoir de fluide de refoulement (108) et une sortie de fluide de refoulement (42) qui peut être connectée à un consommateur de fluide de refoulement.

14. Dispositif de pompe à piston (1) selon la revendication 13, dans lequel en outre un agencement de soupapes (4 ; 38 ; 46) est prévu, avec lequel une ouverture et/ou une fermeture de l'entrée de fluide de refoulement (36) et/ou de la sortie de fluide de refoulement (32) peuvent être réglées.

15. Pompe de lubrifiant (100) comprenant un boîtier (102) qui présente un réservoir (108) pour du lubrifiant et une portion de boîtier de pompe (104, 106) comprenant une unité de pompe (1), l'unité de pompe (1) étant conçue de manière à refouler un lubrifiant depuis le réservoir (108) à une sortie de lubrifiant (52, 62, 64) disposée au niveau du boîtier (102), **caractérisée en ce que** l'unité de pompe est réalisée en tant que dispositif de pompe à piston (1) selon l'une quelconque des revendications précédentes.
